# EUROPEAN PATENT SPECIFICATION

(11) **EP 0 584 878 B1**
(45) Date of publication and mention of the grant of the patent: **06.11.1996**
(21) Application number: 93202467.2
(22) Date of filing: 23.08.1993
(51) Int. Cl.: B29C 70/00

(54) **Dies and their use in pultrusion**
Ziehdüsen und deren Verwendung bei der Pultrusion
Filières et leur utilisation dans la pultrusion

(30) Priority: 26.08.1992 GB 9218189
(43) Date of publication of application: 02.03.1994
(73) Proprietor: SHELL INTERNATIONALE RESEARCH MAATSCHAPPIJ B.V., 2596 HR Den Haag (NL)
(72) Inventor: Williams, Malcolm David, Hale Barns, Cheshire WA15 05H (GB); Randall, John Edward, Runcorn, Cheshire WA7 SR1 (GB)

(56) References cited:
- US-A- 2 694 661
- US-A- 2 990 091
- US-A- 3 583 030

## Description

This invention relates to dies and their use in pultrusion.

Pultrusion is a technique used to produce solid and/or hollow rods of thermoplastic materials, e.g. glass-reinforced, by passage through compaction dies. It would be desirable to improve the strength and surface finish of products obtained in this way.

According to the present invention, a compaction die comprises, fixed between rigid ends thereof, a flexible tube contained within a pressure chamber having an inlet for the introduction of fluid under pressure. Such a die can be used in a pultrusion process to produce rods of thermoplastic material having improved properties.

The die of the present invention allows external pressure to be applied to the flexible tube. If pressure is applied when a rod of thermoplastic material passes through the tube, then that pressure will be transferred to the surface of the rod, helping to consolidate the rod, thereby preventing formation of voids or delamination, and producing an improved surface finish. The pressure is preferably at least 100 kPa, more preferably at least 200 kPa.

The flexible tube is preferably of an elastomeric material. Since there may be a certain amount of friction between the thermoplastic rod and the tube, it is preferable that the elastomeric material has a coefficient of friction lower than that of natural rubber. In this respect, silicone rubber is a preferred elastomeric material. The inside wall of the tube is preferably lubricated. Any suitable sealant may be used, as may be necessary to prevent rupturing, and to secure the tube to the fixed ends of the novel compaction die.

According to one embodiment of the present invention, the chamber may additionally comprise a fluid outlet. This will facilitate the use of, as the pressuring fluid, a liquid such as water. The continuous passage of a liquid from inlet to outlet in contact with the tube has the advantage of cooling the rod while it passes through the die.

A compaction die of the present invention can be used in a process for the production of pultruded thermoplastic profiles. The process comprises passing a thermoplastic rod sequentially through a fixed die, the compaction die and optionally, cooling means. Preferably, the rod is fibre-reinforced, glass being a preferred fibre material.

Two or more of the variable cross-section compaction dies may be used. This has been found further to improve the properties of the rod.

In addition to the fixed die described above, the rod may be passed through an additional fixed die. This additional die suitably has a smaller diameter than the first fixed die.

The invention will now be described by way of example only, with reference to the accompanying drawings, in which:
Figures 1 and 2 each are cross-sectional views of different compaction dies, each embodying the present invention; and
Figure 3 is a schematic view of part of such a die, showing detail of a preferred modification of the exit.

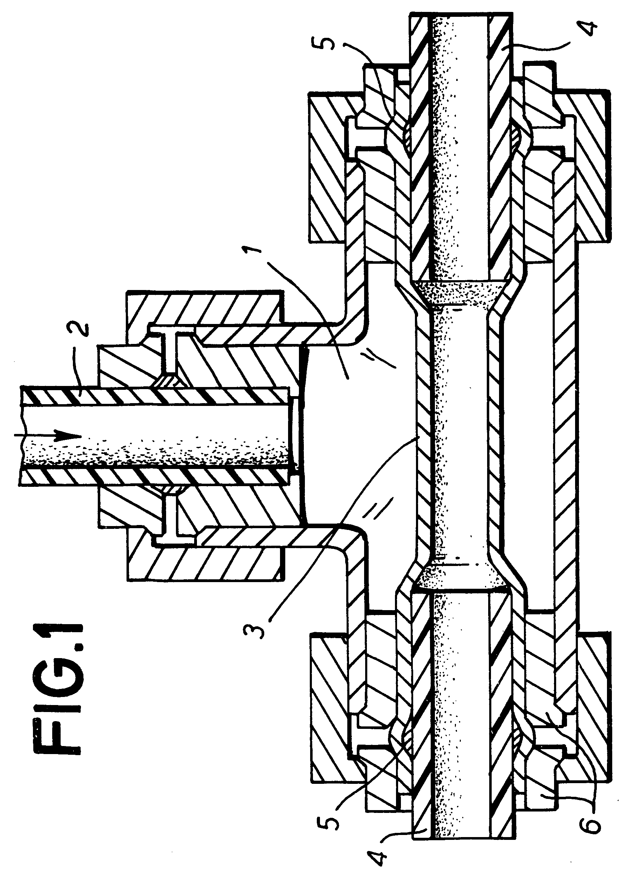

Figure 1 shows the cross-section of a compaction die comprising a pressure chamber 1 having a single, centrally-placed fluid inlet 2. The inlet, which is made of nylon, allows a pressurised fluid (e.g. air) to enter the pressure chamber. Within the pressure chamber is a flexible tube 3 that carries a thermoplastic rod during use in pultrusion.

The flexible tube 3 is fixed to the ends of the die, by placing each of its ends over rigid nylon tubes 4 that have a larger diameter than the flexible tube. The rigid tubes have on their outer surface brass olives 5 that prevent the ends of the flexible tube from slipping off the rigid tubes. Each end of the flexible tube is then held in the die by means of reduction adaptors 6.

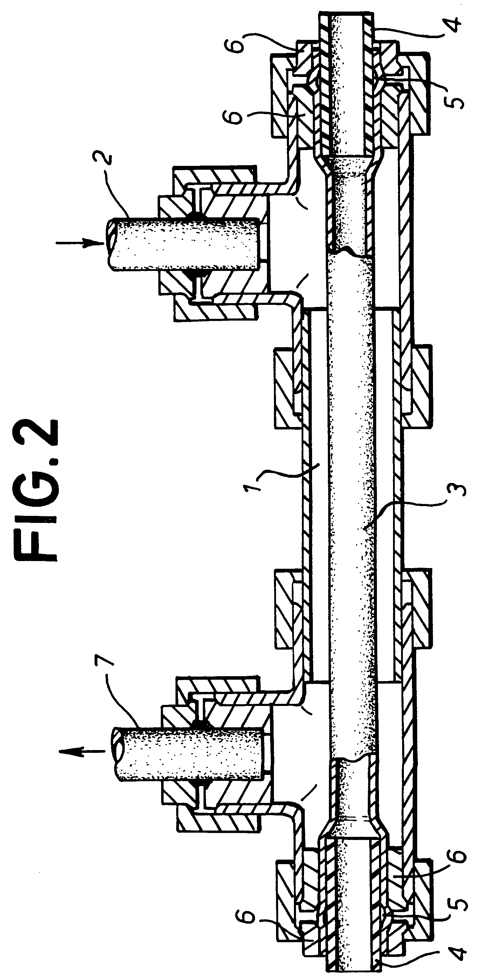

Figure 2 shows a compaction die analogous to that of Figure 1 but comprising a pressure chamber 1 that has both a fluid inlet 2 and a fluid outlet 7. The presence of the fluid outlet facilitates the use of a liquid as the pressuring fluid. As with the die of Figure 1, the pressure chamber contains a flexible tube 3 attached at both its ends to the die, by way of stretching the ends of the flexible tube over larger diameter rigid tubes 4.

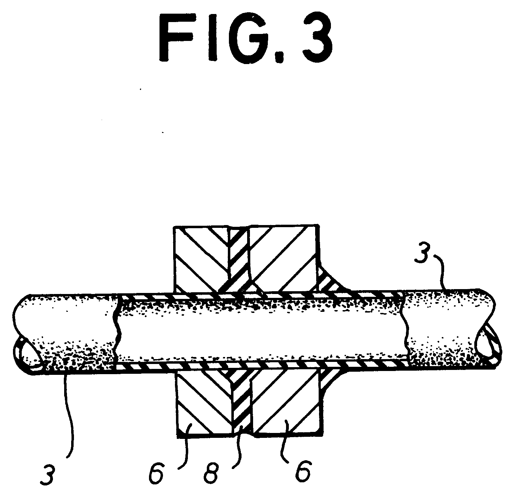

Figure 3 shows a flexible tube 3 that is bonded, by means of a sealant 8, to a reduction fitting 6, thus forming a rigid end of the die.

The following Examples illustrate the invention or are comparative. They relate to trial runs producing 5 mm diameter glass-reinforced polypropylene rods, using compaction dies of Type 1 (see Figure 1) or Type 2 (see Figure 2).

The following information is common to all of the trial runs undertaken:-
- Polymer matrix -: Polypropylene, Grade TY6500 supplied by Shell Nederland Chemie
- Reinforcement -: Glass, 12 ends of 2400 Tex, Grade R16EX3 supplied by O.C.F.
- Oven temperature -: 210-240°C
- Carbide die temperature -: 220°C.

The relative positions of the individual dies relative to oven exit are given in the following Table.

| Example | 6.0 mm die (Carbide) | 5.5 mm die (Carbide) | Compaction Die 1 | Compaction Die 2 |
|---|---|---|---|---|
| 1-2 | - | 130 mm | 345 mm | - |
| 3-4 | 0 mm | 180 mm | 250 mm | - |
| 5 | 0 mm | 180 mm | 250 mm | - |
| 6 | 0 mm | 180 mm | 285 mm | - |
| 7 | 0 mm | 180 mm | 455 mm | - |
| 8 | 0 mm | 180 mm | 605 mm | - |
| 9 | 0 mm | 200 mm | 725 mm | 970 mm |

### Example 1

Equipment configuration - 5.5 mm diameter carbide die, Type 1 compaction die, 3 x 195 mm long water baths.
Elastomeric tube material - Natural rubber
Compaction die effective length - 25 mm
Working fluid - Air
Working pressure - 69 kPa

By way of comparison, when no air pressure was applied to the compaction die, the resulting profile showed poor consolidation and delaminated readily when subject to flexural forces. Under 69 kPa air pressure applied to the compaction die, the surface finish of the profile improved and the profile appeared stiffer and less easily delaminated when bent.

### Example 2

Equipment configuration as in Example 1
Elastomeric tube material - Silicone Rubber
Compaction die effective length - 25 mm
Working fluid - Air
Working pressure - 34.5, 69 or 100 kPa

The surface finish of the profile and the resistance of the profile to delamination when subjected to flexural forces both improved with increasing pressure.

### Example 3

Equipment configuration - 6.0 mm Carbide die, 5.5 mm Carbide die, Type 1 Compaction die, 1 metre long water bath.
Elastomeric tube material - Silicone rubber
Compaction die effective length - 25 mm
Working fluid - Air
Working pressure - 34.5, 69, 100, 275 or 390 kPa

It had been observed during previous trial runs that the glass pack was exiting from the oven as a flat strip and being formed in to a U-shaped cross section when approaching the carbide die. This was leading to a weld line along the axis of the profile which was felt to be possibly detrimental to profile properties. In order to improve this situation, a 6.0 mm Carbide die was placed at the oven exit to preform the pack before it entered the 5.5 mm carbide die. The use of two carbide dies in tandem appeared to be beneficial. As with previous runs there appeared to be a direct correlation between profile properties and applied pressure.

### Example 4

Example 3 was repeated at 69, 138, 275 and 390 kPa, except that the compaction die effective length was increased from 25 mm to 100 mm and, in order to accommodate the increased length, the Type 1 compaction die was changed to a Type 2 compaction die. Increasing the length of the die increased the residence time of the profile within the die. As with previous runs, an improvement in profile properties (surface finish and flexural integrity) was observed with increasing die pressure.

### Example 5

Equipment configuration as in Example 4, with pressure pot to provide pressurised water feed.
Elastomeric tube material - Silicone rubber
Compaction die effective length - 100 mm
Working fluid - Water
Working pressure - 138, 275, 415, 550 or 695 kPa

The water supply for the compaction die was derived from a pressure pot filled with water and pressurised by a regulated air supply. The profile ran successfully over a period of one hour, during which time the different compaction pressures were used. It was found that the profile properties appeared to improve with increased pressure up to 415 kPa, after which increasing the pressure gave no apparent improvement in properties. At pressures above 275 kPa, polymer run-off was observed at the compaction die entrance.

It was also observed that although a skin had formed on the surface of the profile at the compaction die exit, the profile was still soft and easily deformed until approximately 300 mm after entering the water bath. These observations indicate the preference for a series of compaction dies, each with the ability to cool the profile, possibly operating at different applied pressures.

### Example 6

Example 5 was repeated, at 138 and 275 kPa, except that the compaction die construction was changed to that shown in Figure 3. The profile was run for a total of 70 minutes with no sign of problems, after which the run was stopped and the compaction die stripped and examined. A moderate build up of apparently polymer-rich material was found within the silicone rubber tube, just before the die exit. One possible explanation for this build-up is the partial breakdown of the thin skin formed during cooling, a small amount of this material being trapped within the die. It may therefore be desirable, for a single compaction die placed at various distances from the 5.5 mm carbide die, to find a point at which the profile surface was formed sufficiently to resist flaking away while the core of the profile was still soft enough to be deformed.

### Example 7

Example 6 was repeated, with the distance from the exit of the 5.5 mm carbide die to the entrance of the compaction die being 250 mm. As for example 6, the profile was run for a total of 70 minutes, the first 30 minutes being at 138 kPa and the remaining 40 minutes being at 275 kPa. No problems were encountered during running; only during the final 5 minutes of running was there any run-off at the compaction die entrance. The compaction die was stripped and examined, revealing a build-up of material at the exit end of the die, but at a level less than that found for Example 6.

### Example 8

Example 7 was repeated, except that the distance from the exit of the 5.5 mm carbide die to the entrance of the compaction die was 400 mm. After the total run time of 70 minutes, disassembly and examination of the compaction die showed the presence of a small amount of apparently polymer-rich material built up at the exit of the die. This build-up was much less than that observed for Examples 6 and 7.

## Claims

1. A compaction die comprising, fixed between rigid ends (4) thereof, a flexible tube (3) contained within a pressure chamber (1) having an inlet (2) for the introduction of fluid under pressure.

2. A die according to claim 1 wherein the tube (3) is of elastomeric material.

3. A die according to claim 2, wherein the elastomeric material is silicone rubber.

4. A die according to claim 1, 2 or 3, wherein the inside wall of the tube is lubricated.

5. A process for the production of a rod of thermoplastic material, comprising subjecting the material, as it solidifies, to pultrusion through a fixed die and a compaction die as defined in claim 1, 2, 3 or 4.

6. A process according to claim 5, which comprises passing the rod through two or more of the compaction dies.

7. A process according to claim 5 or claim 6, which comprises passing the rod through an additional fixed die, the additional die having a diameter smaller than that of the said fixed die.

8. A process according to claims 5, 6 or 7, wherein the rod is reinforced with glass fibre.

## Patentansprüche

1. Verdichtungsdüse, enthaltend ein zwischen deren starren Enden (4) fest angebrachtes flexibles Rohr (3), das von einer Druckkammer (1) mit einem Einlaß (2) zum Eintrag von Fluid unter Druck umgeben ist.

2. Düse nach Anspruch 1, wobei das Rohr (3) aus elastomerem Material besteht.

3. Düse nach Anspruch 2, wobei es sich bei dem elastomeren Material um Silikonkautschuk handelt.

4. Düse nach Anspruch 1, 2 oder 3, wobei die Innenseite des Rohrs mit einem Gleitmittel versehen ist.

5. Verfahren zur Herstellung einer Stange aus thermoplastischem Material, bei dem man das Material bei seiner Verfestigung durch eine feststehende Düse und eine Verdichtungsdüse gemäß Anspruch 1, 2, 3 oder 4 pultrudiert.

6. Verfahren nach Anspruch 5, bei dem man die Stange durch zwei oder mehr Verdichtungsdüsen führt.

7. Verfahren nach Anspruch 5 oder Anspruch 6, bei dem man die Stange durch eine weitere feststehende Düse führt, die einen kleineren Durchmesser als die erste feststehende Düse besitzt.

8. Verfahren nach den Ansprüchen 5, 6 oder 7, wobei die Stange glasfaserverstärkt ist.

## Revendications

1. Filière de compaction comprenant, fixé entre les extrémités rigides (4) de celle-ci, un tube souple (3) contenu au sein d'une chambre de pression (1) ayant une entrée (2) pour l'introduction de fluide sous pression.

2. Filière selon la revendication 1, caractérisée en ce que le tube (3) est en matériau élastomère.

3. Filière selon la revendication 2, caractérisée en ce que le matériau élastomère est du caoutchouc aux silicones.

4. Filière selon la revendication 1, 2, ou 3, caractérisée en ce que la paroi interne du tube est lubrifiée.

5. Procédé en vue de la production d'une tige de matériau thermoplastique, comprenant la soumission du matériau, au cours de sa solidification, à une pultrusion à travers une filière fixée et une filière de compaction, telle qu'elle est définie dans la revendication 1, 2, 3 ou 4.

6. Procédé selon la revendication 5, qui comprend le passage de la tige à travers deux ou plusieurs des filières de compaction.

7. Procédé selon la revendication 5 ou la revendication 6, qui comprend le passage de la tige à travers une filière fixée supplémentaire, la filière supplémentaire ayant un diamètre inférieur à celui de ladite filière fixée.

8. Procédé selon les revendications 5, 6, ou 7, caractérisé en ce que la tige est renforcée à l'aide de fibre de verre.
